# EUROPEAN PATENT SPECIFICATION

(11) **EP 1 216 283 B1**
(45) Date of publication and mention of the grant of the patent: **07.07.2004**
(21) Application number: 00964429.5
(22) Date of filing: 29.09.2000
(51) Int. Cl.: C09K 5/04

(54) **R-12 REPLACEMENT REFRIGERANT**
KUEHLMITTELZUSAMMENSETZUNG ALS ALTERNATIVE FÜR R-12
REFRIGERANT DE REPLACEMENT POUR R12

(30) Priority: 30.09.1999 GB 9923088; 15.05.2000 GB 0011653
(43) Date of publication of application: 26.06.2002
(73) Proprietor: Refrigerant Products Ltd., Trafford Park, Manchester M17 1PG (GB)
(72) Inventor: Powell, Richard, Bunbury Cheshire CW6 9NW (GB); Poole, John Edward, Altrincham Cheshire WA15 9ST (GB); Capper, John Derek, Northwich Cheshire CW9 8LY (GB); THOMAS, James Victor, Fall River, Nova Scotia B2T 1H7 (CA)
(74) Representative: Browne, Robin Forsythe, Dr.
(86) International application number: PCT/GB2000/003724
(87) International publication number: WO 2001/023492

(56) References cited:
- WO-A-94/18282
- WO-A-97/16501

## Description

This invention relates to a refrigerant particularly but not exclusively for air conditioning systems. The system relates especially to refrigerant compositions which have no adverse effect on the atmospheric ozone layer and to compositions which can be added to existing refrigerants which are compatible with lubricants commonly used in refrigeration and air conditioning systems. The invention also relates to a method of modifying refrigeration and air conditioning systems.

Chlorofluorocarbons (CFCs) eg CFC 11 and CFC 12 are stable, of low toxicity and non-flammable providing low hazard working conditions used in refrigeration and air conditioning systems. When released they permeate into the stratosphere and attack the ozone layer which protects the environment from damaging effects of ultraviolet rays. The Montreal Protocol, an International environment agreement signed by over 160 countries, mandates the phase-out of CFCs according to an agreed timetable. This now includes hydrochlorofluorocarbons (HCFCs) which also have an adverse effect on the ozone layer.

Any replacement for R 12 must have no ability to deplete ozone. The compositions of the present invention do not include chlorine atoms and consequently they will have no deleterious effect on the ozone layer while providing a similar performance as a working fluid to R 12 in refrigeration apparatus.

Various terms have been used in patent literature to describe refrigerant mixtures. These may be defined as follows:
**Zeotrope:** A fluid mixture whose vapour and liquid compositions are different at a specified temperature.
**Temperature glide:** If a zeotropic liquid is distilled at constant pressure its boiling point will increase. The change in boiling point from the beginning of the distillation until the point when a liquid phase has just disappeared is called the temperature glide. A glide is also observed when the saturated vapour of a zeotrope is condensed at constant pressure.
**Azeotrope:** A fluid mixture of specified composition whose vapour and liquid compositions are the same at a specified temperature. Strictly speaking a fluid mixture which is an azeotrope under for example evaporator conditions, cannot also be an azeotrope under the condenser conditions. However the refrigeration literature may describe a mixture as azeotropic provided that it meets the above definition at some temperature within its working range.
**Near-azeotropes:** A blend which boils over a small temperature range, that has a small temperature glide.
**Retrofit refrigerant mixture:** A non-chlorine-containing mixture used to replace completely the original CFC or HCFC refrigerant.
**Extender refrigerant mixture:** A non-cholorine-containing mixture added during servicing to the CFC or HCFC refrigerant remaining in a unit, that is a top up refrigerant to make good any leakage.
**Hermetic compressor:** A compressor where the electric motor is in the same totally welded casing as the compressor. The motor is cooled by the refrigerant vapour returning to the compressor. The heat generated by the motor is removed through the condenser.
**Semi-hermetic compressor:** Similar to a hermetic compressor, the major difference being the casing has a bolted joint which can be opened to enable the motor and compressor to be serviced.
**Open compressor:** A compressor which is driven by an external motor via a drive shaft passing through the compressor casing. The motor heat is dissipated directly to the environment, not via the condenser. This results in a slightly more efficient performance than a hermetic compressor, but refrigerant leaks can occur at the shaft seal.

WO97/16501 discloses a refrigerant comprising R134a and pentane.

Percentages and proportions referred to in this specification are by weight unless indicated otherwise. Percentages and proportions are selected to total 100%

According to the present invention a refrigerant composition comprises 1,1,1,2-tetrafluoroethane (R 134a) and butane and pentane wherein the weights of pentane and R 134a are in the range.

| | |
|---|---|
| n-pentane, iso-pentane & butane | 1 - 5% |
| R 134a | 99 - 95% |

Positive displacement compressors, that is reciprocating or rotary compressors, used in refrigeration systems suck in small amounts of lubricant from the crank case which are ejected with the refrigerant vapour through the exhaust valves. In order to maintain compressor lubrication this oil must be forced around the circuit by the refrigerant stream and returned to the crank case. CFC and HCFC refrigerants are miscible with hydrocarbon oils and hence carry the oils around the circuit. However HFC refrigerants and hydrocarbon lubricants have low mutual solubilities so effective oil return may not occur. The problem is particularly acute in evaporators where low temperatures can increase the viscosities of oils sufficient to prevent them being carried along the tube walls. With CFCs and HCFCs enough refrigerants remains in the oil to reduce the viscosities to enable oil return to occur.

When using HFCs with hydrocarbon lubricants oil return can be facilitated by introducing into the system a hydrocarbon fluid having the following properties:-
(a) sufficient solubility in the lubricant at the evaporator temperature to reduce its viscosity; and
(b) sufficient volatility to allow distillation from the hot lubricant in the compressor crank case.

Hydrocarbons fulfil these requirements.

Use of n-pentane, isopentane or mixtures thereof is especially preferred.

The amounts of pentane may be up to 5%, preferably 1 to 5% and more preferably about 2 - 3%

Use of a lower boiling hydrocarbon boosts capacity and enhances oil return. The total amount of pentane and additional hydrocarbons may be selected to equal the amounts of pentane set out above.

In particularly preferred embodiments of the invention a mixture of pentane, preferably n-pentane, isopentane or a mixture hereof together with butane is employed. This provides the advantage that a close boiling or near azeotropic blend may be obtained so that formation of a flammable high proportion of pentane is avoided in the event of leakage, for example from a storage cylinder.

Relative proportions of the pentane and butane components may be selected to give a total of 0.2 to 5% of the composition, preferably 2 to 4%, more preferably 3 to 4%. An amount of pentane, preferably isopentane of 0.2 to 2% may be used together with a corresponding amount of 4.8 to 3% of butane in a composition containing a total of 5% hydrocarbon. In compositions with less than 5% hydrocarbon, for example 1% or 4%, relatively larger ratios of butane: pentane may be employed to minimise hydrocarbon build -up on leakage. Flammability risks are therefore reduced.

A particularly preferred compositions comprises:

| | |
|---|---|
| R 134a | 96 - 97% |
| Pentane/butane mixture | 3 - 4% |

A ratio of pentane/butane of 1 : 3 to 1 : 8, preferably about 1 : 5 may be employed.

Refrigerant compositions in accordance with this invention confer several advantages. The presence of pentane in the mixture increases the solubility properties of the mixture with traditional lubricants, for example mineral and alkyl benzene oils.

The present invention may confer a number of benefits in comparison to R 12 including lower intrinsic global warming potential and lower discharge temperature. The present invention may confer a number of benefits in comparison to pure R 134a including greater miscibility and higher solubility in hydrocarbon oils and hence better oil return.

The invention is further described by means of examples but not in any limitative sense.

### COMPARATIVE EXAMPLE 1

The performance of five R134a/pentane compositions was evaluated using standard refrigeration cycle analysis techniques in order to assess their suitability as retrofit replacements for R12 in hermetic or semi-hermetic systems. The operating conditions used for the analyses were chosen as being typical of the conditions found in refrigeration systems. Since the blends were zeotropes the midpoints of their temperature glides in the evaporator and condenser were chosen to define the temperature limits of the cycle. The same temperatures were also used to generate performance data from R12.

The following refrigerant compositions were subjected to cycle analysis.
1. A composition comprising 1% pentane, 99% 134a
2. A composition comprising 2% pentane, 98% 134a
3. A composition comprising 3% pentane, 97% 134a
4. A composition comprising 4% pentane, 96% 134a
5. A composition comprising 5% pentane, 95% 134a

The following cycle conditions were used in the analysis:

| COOLING DUTY DELIVERED | 10 kW |
|---|---|
| EVAPORATOR | |
| Midpoint fluid evaporation temperature | -20°C |
| Superheating | 5.0°C |
| Suction line pressure drop (in saturated temperature) | 1.5°C |

| CONDENSER | |
|---|---|
| Midpoint fluid condensing temperature | 45.0°C |
| Subcooling | 5.0°C |
| Discharge line pressure drop (in saturated temperature) | 1.5% |

| LIQUID LINE/SUCTION LINE HEAT EXCHANGER | |
|---|---|
| Efficiency | 0.3% |

| COMPRESSOR | |
|---|---|
| Electric motor efficiency | 0.85 |
| Compressor isentropic efficiency | 0.7 |
| Compressor volumetric efficiency | 0.82 |

| PARASITIC POWDER | |
|---|---|
| Evaporator fan | 0.3 kW |
| Condenser fan | 0.4 kW |
| Controls | 0.1 kW |

The results of analysing the performances in a refrigeration unit using these operating conditions are shown in Table 1. For comparison the performance of R 12 is also shown. All compositions have lower discharge temperatures than R12 and are therefore superior on this account. However with higher pentane contents the cooling capacity is reduced so compositions with the minimum adequate pentane content to ensure oil return are preferred, notably those with between 2 and 3%

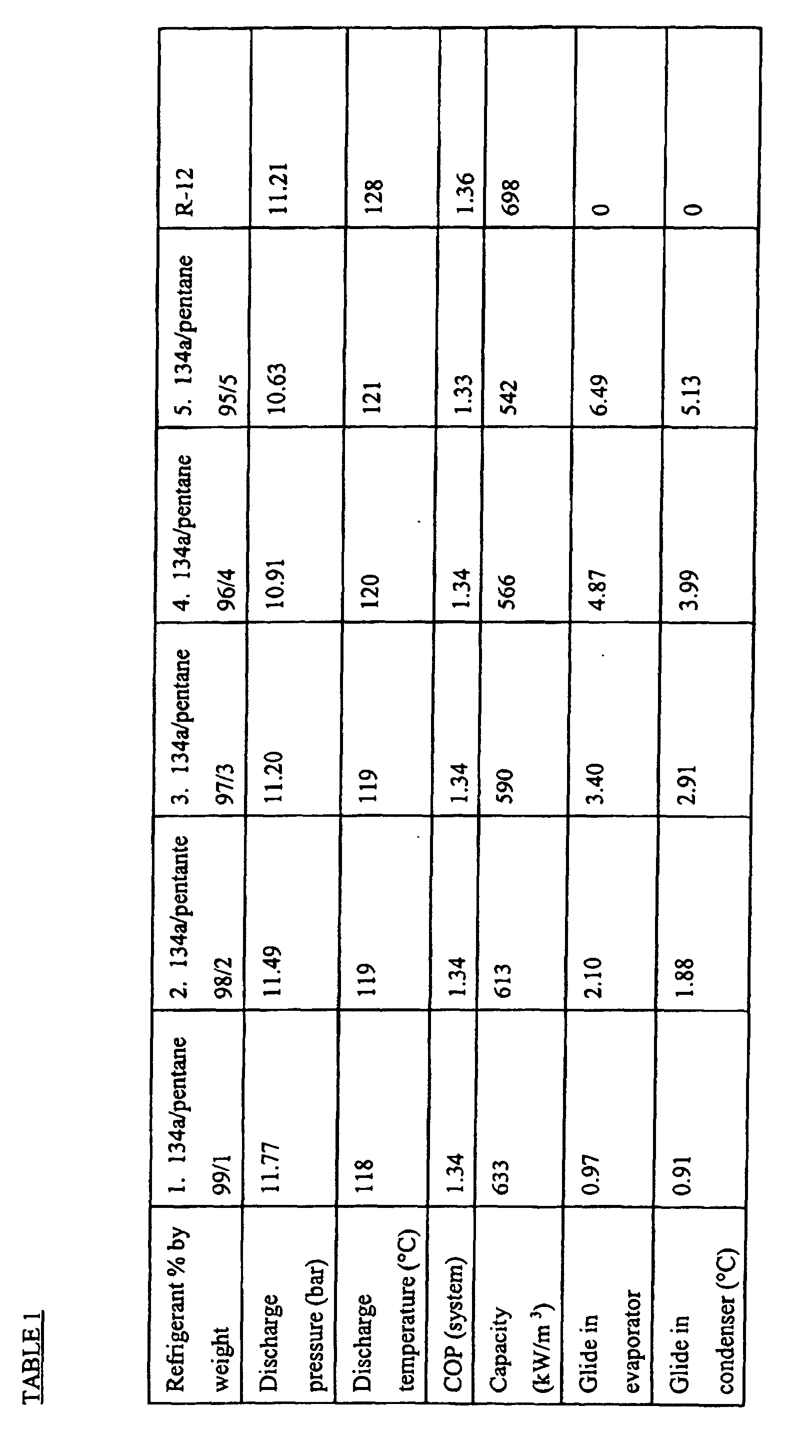

### COMPARATIVE EXAMPLE 2

The performance of five R134a/pentane compositions was evaluated using standard refrigeration cycle analysis in order to assess their suitability as retrofit replacements for R12 in open systems. The operating conditions, used for the analyses were chosen as being typical of conditions found in refrigeration systems. Since the blends were zeotropes the midpoints of their temperature glides in the evaporator and condenser were chosen to define the temperature limits of the cycle. The same temperatures were also used to generate performance data for R12.

The following compositions were subjected to cycle analysis:
1. A composition comprising 1% pentane, 99% 134a
2. A composition comprising 2% pentane, 98% 134a
3. A composition comprising 3% pentane, 97% 134a
4. A composition comprising 4% pentane, 96% 134a
5. A composition comprising 5% pentane, 95% 134a

The following cycle conditions were used in the analysis:

| COOLING DUTY | 10 kW |
|---|---|
| EVAPORATOR | |
| Midpoint fluid evaporation temperature | -10.0°C |
| Superheating | 5.0°C |
| Suction line pressure drop (in saturated temperature) | 1.5°C |

| CONDENSOR | |
|---|---|
| Midpoint fluid condensing temperature | 45.0°C |
| Subcooling | 5.0°C |
| Discharge line pressure drop (in saturated temperature) | 1.5% |

| LIQUID LINE/SUCTION LINE HEAT EXCHANGER | |
|---|---|
| Efficiency | 0.3% |

| COMPRESSOR | |
|---|---|
| Electric motor efficiency | 0.85 |
| Compressor isentropic efficiency | 0.7 |
| Compressor volumetric efficiency | 0.82 |

| PARASITIC POWER | |
|---|---|
| Evaporator fan | 0.3kW |
| Condenser fan | 0.4kW |
| Controls | 0.1 kW |

The results of analysing the performances in an air-conditioning unit using these operating conditions are shown in Table 2. For comparison the performance of R12 is also shown. All compositions have lower discharge temperatures than R12 and are therefore superior on this account. However with higher pentane contents the cooling capacity is reduced so compositions with the minimum adequate pentane contents to ensure oil return are preferred, notably those with between 2 and 3%

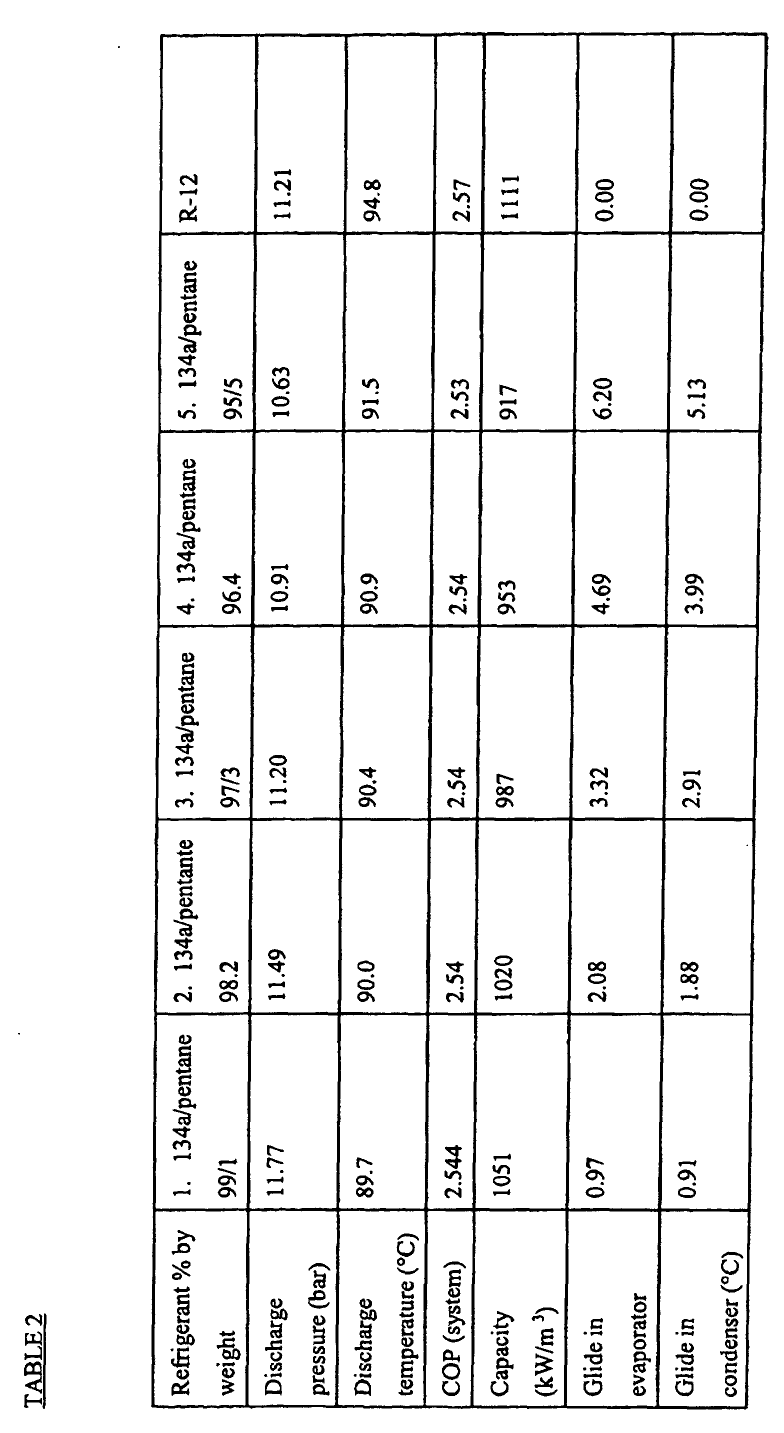

### COMPARATIVE EXAMPLE 3

The performance of five R134a/pentane compositions was evaluated using standard refrigeration cycle analysis in order to assess their suitability as retrofit replacements for R12 in mobile air conditioning systems. The operating conditions used for the analysis were chosen as being typical of conditions found in refrigeration systems. Since the blends were zeotropes the midpoints of their temperature glides in the evaporator and condenser were chosen to define the temperature limits of the cycle. The same temperatures were also used to generate performance data for R12.

The following refrigerant compositions were subjected to cycle analysis:
1. A composition comprising 1 % pentane, 99% 134a
2. A composition comprising 2% pentane, 98% 134a
3. A composition comprising 3% pentane, 97% 134a
4. A composition comprising 4% pentane, 96% 134a
5. A composition comprising 5% pentane, 95% 134a

The following cycle conditions were used in the analysis:

| COOLING DUTY DELIVERED | 10kW |
|---|---|
| EVAPORATOR | |
| Midpoint fluid evaporation temperature | 7.0°C |
| Superheating | 5.0°C |
| Suction line pressure drop (in saturated temperature) | 1.5°C |

| CONDENSER | |
|---|---|
| Midpoint fluid condensing temperature | 60.0°C |
| Subcooling | 5.0°C |
| Discharge line pressure drop (in saturated temperature) | 1.5% |

| COMPRESSOR | |
|---|---|
| Compressor isentropic efficiency | 0.7 |
| Compressor volumetric efficiency | 0.82 |

| PARASITIC POWER | |
|---|---|
| Condenser fan | 0.4Kw |

The results of anlaysing the performances in an air-conditioning unit using these operating conditions are shown in Table 3. For comparison the performance of R12 is also shown. All compositions have lower discharge temperatures than R12 and are therefore superior on this account. However with higher pentane contents the cooling capacity is reduced so compositions with the minimum adequate contents to ensure oil return are preferred, notably those with between 2 and 3%

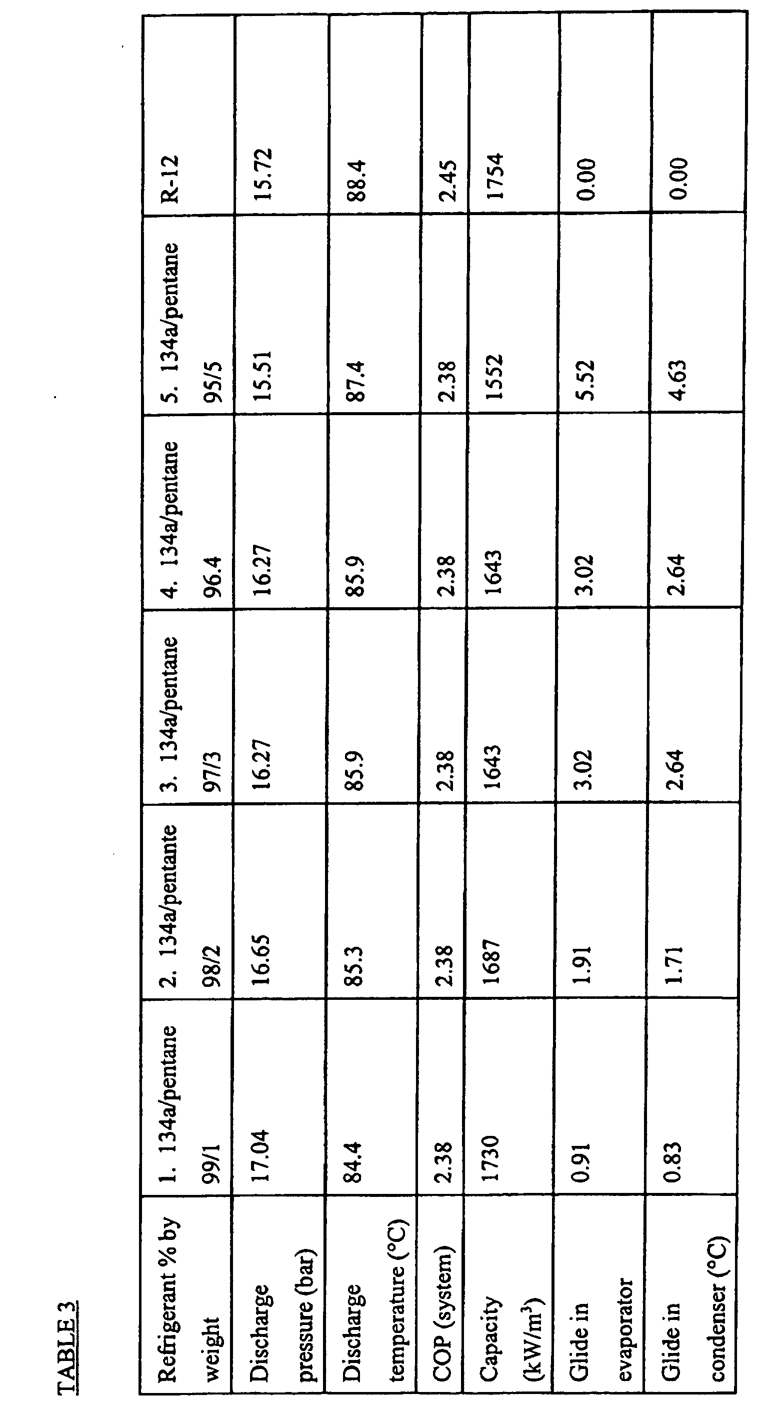

### EXAMPLE 4

The performance of two R134a/pentane/butane compositions was evaluated using standard refrigeration cycle analysis techniques in order to assess their suitability as retrofit replacements for R12 in hermetic or semi-hermetic systems. The operating conditions used for the analyses were chosen as being typical of conditions found in refrigeration systems. Since the blends were zeotropes the midpoints of their temperature glides in the evaporator and condenser were chosen to define the temperature limits of the cycle. The same temperatures were also used to generate performance data for R12.

The following refrigerant compositions were subjected to cycle analysis:
1. A composition comprising 1% pentane, 2.5% butane, 96.5% 134a
2. A composition comprising 1.7% pentane, 2.6% butane, 95.7% 134a.

The following cycle conditions were used in the analysis:

| COOLING DUTY DELIVERED | 10 kW |
|---|---|
| EVAPORATOR | |
| Midpoint fluid evaporation temperature | 7-20°C |
| Superheating | 5.0°C |
| Suction line pressure drop (in saturated temperature) | 1.5°C |

| CONDENSER | |
|---|---|
| Midpoint fluid condensing temperature | 45.0°C |
| Subcooling | 5.0°C |
| Discharge line pressure drop (in saturated temperature) | 1.5% |

| LIQUID LINE/SUCTION LINE HEAT EXCHANGER | |
|---|---|
| Efficiency | 0.3 |

| COMPRESSOR | |
|---|---|
| Electric motor efficiency | 0.85 |
| Compressor isentropic efficiency | 0.7 |
| Compressor volumetric efficiency | 0.82 |

| PARASITIC POWER | |
|---|---|
| Evaporator fan | 0.3 kW |
| Condenser fan | 0.4 kW |
| Controls | 0.1 kW |

The results of analysing the performances in a refrigeration unit using these operating conditions are shown in Table 1. For comparison the performance of R12 is also shown. All compositions have lower discharge temperatures than R12 and are therefore superior on this account. However with higher pentane contents the cooling capacity is reduced so compositions with the minimum adequate pentane content to ensure oil return are preferred, notably those with between 2 and 3%

**TABLE 4**

| | | | | | |
|---|---|---|---|---|---|
| Refrigerant % by weight | Pentane | 1.0 | Pentane | 1.0 | R-12 |
| | butane | 2.5 | butane | 2.6 | |
| | 134a | 96.5 | 134a | 95.7 | |
| Discharge pressure (bar) | 11.24 | | 11.04 | | 11.21 |
| Discharge temperature (°C) | 118 | | 119 | | 128 |
| COP (system) | 1.34 | | 1.34 | | 1.36 |
| Capacity (kW/m³) | 631 | | 616 | | 698 |
| Glide in evaporator (°C) | 1.09 | | 1.96 | | 0 |
| Glide in condenser (°C) | 1.03 | | 1.77 | | 0 |

### COMPARATIVE EXAMPLE 5

The performance of two R134a/pentane/isobutane compositions were evaluated using standard refrigeration cycle analysis techniques in order to assess their suitability as retrofit replacements for R12 in hermetic or semi-hermetic systems. The operating conditions used for the analyses were chosen as being typical of conditions found in refrigeration systems. Since the lends were zeotropes the midpoints of their temperature glides in the evaporator and condenser were chosen to define the temperature limits of the cycle. The same temperatures were also used to generate performance data for R12.

The following refrigerant compositions were subjected to cycle analysis:
3. A composition comprising 1.7% pentane, 1.9% isobutane, 96.4% 134a
4. A composition comprising 1.7% pentane, 1.1% isobutane, 97.2% 134a

The following cycle conditions were used in the analysis:

| COOLING DUTY DELIVERED | 10 kW |
|---|---|
| EVAPORATOR | |
| Midpoint fluid evaporation temperature | 7-20°C |
| Superheating | 5.0°C |
| Suction line pressure drop (in saturated temperature) | 1.5°C |

| CONDENSER | |
|---|---|
| Midpoint fluid condensing temperature | 45.0°C |
| Subcooling | 5.0°C |
| Discharge line pressure drop (in saturated temperature) | 1.5% |

| LIQUID LINE/SUCTION LINE HEAT EXCHANGER | |
|---|---|
| Efficiency | 0.3 |

| COMPRESSOR | |
|---|---|
| Electric motor efficiency | 0.85 |
| Compressor isentropic efficiency | 0.7 |
| Compressor volumetric efficiency | 0.82 |

| PARASITIC POWER | |
|---|---|
| Evaporator fan | 0.3 kW |
| Condenser fan | 0.4 kW |
| Controls | 0.1 kW |

The results of analysing the performances in a refrigeration unit using these operating conditions are shown in Table 1. For comparison the performance of R12 is also shown. All compositions have lower discharge temperatures than R12 and are therefore superior on this account.

**TABLE 5**

| | | | | | |
|---|---|---|---|---|---|
| Refrigerant % by weight | Pentane | 1.7 | Pentane | 1.7 | R-12 |
| | isobutane | 1.9 | isobutane | 1.1 | |
| | 134a | 96.4 | 134a | 97.2 | |
| Discharge pressure (bar) | 11.73 | | 11.67 | | 11.21 |
| Discharge temperature (°C) | 118 | | 118 | | 128 |
| COP (system) | 1.34 | | 1.34 | | 1.36 |
| Capacity (kW/m³) | 628 | | 624 | | 698 |
| Glide in evaporator (°C) | 2.13 | | 1.98 | | 0.00 |
| Glide in condenser (°C) | 1.83 | | 1.74 | | 0.00 |

## Claims

1. A refrigerant composition consisting of 1, 1, 1,2-tetrafluoroethane (R134a), butane and pentane wherein the weights of hydrocarbon and R134a are in the range:
| | |
|---|---|
| n-pentane, iso-pentane & butane | 1- 5% |
| R134a | 99- 95% |

2. A refrigerant composition as claimed in claim 1, wherein the weights of hydrocarbon and R134a are in the range:
| | |
|---|---|
| n-pentane, iso-pentane & butane | 2 - 3% |
| R134a | 98 - 97% |

3. A refrigerant composition as claimed in claim 1, wherein the combined weight of pentane and butane is in the range 3 - 4%.

## Patentansprüche

1. Kühlmittelzusammensetzung, bestehend aus 1,1,1,2-Tetrafluorethean (R134a), Butan und Pentan, wobei die Gewichte an Kohlenwasserstoff und R134a im Bereich von:
| | |
|---|---|
| n-Pentan, Isopentan & Butan | 1 - 5% |
| R134a | 99-95 % |
liegen.

2. Kühlmittelzusammensetzung gemäß Anspruch 1, wobei die Gewichte an Kohlenwasserstoff und R134a im Bereich von:
| | |
|---|---|
| n-Pentan, Isopentan & Butan | 2 - 3% |
| R134a | 98-97 % |
liegen.

3. Kühlmittelzusammensetzung gemäß Anspruch 1, wobei das kombinierte Gewicht von Pentan und Butan im Bereich von 3-4 % liegt.

## Revendications

1. Composition réfrigérante consistant en tétrafluoro-1,1,1,2-éthane (F134a), butane et pentane dans laquelle les poids d'hydrocarbure et de R 134a se situent dans les proportions suivantes :
| | |
|---|---|
| n-pentane, iso-pentane et butane | 1 - 5 % |
| R134a | 99 - 95 % |

2. Composition réfrigérante selon la revendication 1, dans laquelle les poids d'hydrocarbure et de R134a se situent dans les proportions suivantes :
| | |
|---|---|
| n-pentane, iso-pentane et butane | 2 - 3 % |
| R134a | 98 - 97 % |

3. Composition réfrigérante selon la revendication 1, dans laquelle le poids combiné de pentane et butane se situe entre 3 - 4 %.
